# EUROPÄISCHE PATENTSCHRIFT

(11) **EP 1 404 559 B1**
(45) Veröffentlichungstag und Bekanntmachung des Hinweises auf die Patenterteilung: **28.10.2009**
(21) Anmeldenummer: 02758244.4
(22) Anmeldetag: 19.06.2002
(51) Int. Cl.: B60T 13/68, B60T 15/18, B60T 17/22

(54) **Elektro-Pneumatisch und mechanisch betätigbare Ventileinrichtung und Steuervorrichtung**
Electro-pneumatically and mechanically actuatable valve device and control device
Système de soupape à commande electropneumatique et mécanique et système de commande

(30) Priorität: 25.06.2001 DE 10130541
(43) Veröffentlichungstag der Anmeldung: 07.04.2004
(73) Patentinhaber: KNORR-BREMSE Systeme für Nutzfahrzeuge GmbH, 80809 München (DE)
(72) Erfinder: RÖTHER, Friedbert, 74389 Cleebronn (DE); HERGES, Michael, 80935 München (DE)
(74) Vertreter: Schönmann, Kurt
(86) Internationale Anmeldenummer: PCT/EP2002/006730
(87) Internationale Veröffentlichungsnummer: WO 2003/000527

(56) Entgegenhaltungen:
- EP-A- 0 387 004
- EP-A- 0 582 990
- EP-A- 1 122 142
- DE-A- 19 746 342
- DE-A- 19 935 979
- DE-C- 19 933 483

## Beschreibung

Die Erfindung betrifft eine kombinierte elektro-pneumatisch und mechanisch betätigbare Ventileinrichtung für Bremssysteme mit mindestens zwei Druckkreisen, im Einzelnen mit den Merkmalen aus dem Oberbegriff des Anspruchs 1; ferner eine Steuervorrichtung für ein Bremssystem, insbesondere ein Fahrzeugbremssystem.

Bremseinrichtungen für Fahrzeuge sind hinsichtlich ihres Aufbaus und der Funktionsweise in unterschiedlichen Ausführungen bekannt. Stellvertretend wird auf die nachfolgend genannten Druckschriften:
1. DE 197 46 342 A1 und
2. DE 198 15 440 A1
3. EP 0 582 990 A1
4. EP 0 387 004 A1
5. DE 199 35 979 A1
verwiesen.

Die Druckschrift DE 197 46 342 A1 offenbart beispielhaft eine druckmittelbetätigte Fahrzeugbremsanlage mit wenigstens einem ersten, der Hinterachse des Fahrzeuges zugeordneten Bremskreis und einem zweiten, der Vorderachse des Fahrzeuges zugeordneten Bremskreis. Dabei sind dem ersten Bremskreis als auch dem zweiten Bremskreis je zwei Bremszylinder und je eine Steuerventileinrichtung zugeordnet, über welche die Bremszylinder in Abhängigkeit von einem Steuerdruck mit einer dem jeweiligen Bremskreis zugeordneten Druckmittelquelle oder mit einer Druckmittelsenke verbindbar sind. Zur Steuerung des an den Bremszylindern anliegenden Druckes sind in der Regel Steuereinrichtungen vorgesehen, welche den einzelnen Bremskolben zugeordnet werden. Die Steuerung des Druckes an den Bremszylindern erfolgt dabei elektro-pneumatisch und zusätzlich zur Gewährleistung einer sicheren Betriebsweise bei Ausfall der Elektronik rein pneumatisch. Die Betätigung im letztgenannten Fall erfolgt bekanntermaßen mechanisch. Dazu ist ein mit einem Bremswertgeber koppelbares Betätigungselement vorgesehen, über welches der Fahrer einen Wunsch nach Verzögerung beziehungsweise Erzeugung eines Bremsmomentes abgibt. Aus dem Fahrerwunsch wird ein entsprechendes Signal generiert, welches einem Eingang einer Steuereinrichtung zugeführt wird. In der Steuereinrichtung wird der am Bremszylinder aus dem Fahrerwunsch resultierende erforderliche Druck berechnet und mindestens ein Stellsignal zur Ansteuerung einer Einrichtung zur Erzeugung beziehungsweise Bereitstellung des Druckes erzeugt. Der dabei im Bremszylinder erforderliche bereitzustellende Druck wird mittels eines separaten Gerätes, dem so genannten Druckregelmodul, erzeugt. Dieses umfasst eine Steuerkammer und eine Arbeitskammer, wobei die Steuerkammer mit einer Druckmittelquelle gekoppelt ist, während die Arbeitskammer mit dem Bremszylinder wenigstens mittelbar verbunden ist. Für den Fall des Ausfalls der Elektronik wird jedoch ein rein pneumatisches Rückfallsystem benötigt, das zumindest einen Backupkreis enthält. Dieses rein pneumatische Rückfallsystem ist dabei derart ausgebildet, dass dies ein Betriebsbremsventil mit mindestens einer Arbeitskammer umfasst, die ebenfalls mit dem Bremszylinder gekoppelt ist. Die Betätigung erfolgt über das Betätigungselement, insbesondere weg- oder druckabhängig.

In der Fahrzeugindustrie ist es dabei üblich, die einzelnen Komponenten der Bremsanlage oder andere Systeme speziell auf die entsprechenden Einsatzerfordernisse einzelner Fahrzeugtypen anzupassen beziehungsweise abzustimmen, mit dem Ziel, das Einsatzverhalten dieser Fahrzeuge zu optimieren. Dazu ist es erforderlich, zahlreiche Varianten für Einzelkomponenten zu produzieren und vorzuhalten, welche dann entsprechend den Einsatzerfordernissen miteinander zu kombinieren sind. Dies bedeutet erheblich höhere Lagerhaltungskosten. Des Weiteren bedingt die Kopplung der einzelnen Elemente einen höheren Leitungs- und Verkabelungsaufwand, welcher wiederum eine Fehlerquelle darstellen kann.

Eine Ausführung einer Steuereinrichtung für eine Fahrzeugbremsanlage, welche diese Nachteile zumindest teilweise vermeidet, ist aus der Druckschrift DE 198 15 440 A1 bekannt. Bei dieser sind der Bremswertgeber, der Elektronikblock und ein Teil der Steuerelektronik zu einer Baueinheit zusammengefasst.

Die gattungsgemäße EP 0 582 990 A1 zeigt ein Anhängersteuerventil für Kraftfahrzeugbremsanlagen mit einem ersten Steuerkolben, der über ein elektrisch betätigbares Magnetventil ansteuerbar ist, und einem zweiten Steuerkolben, der pneumatisch ansteuerbar ist. Beiden Steuerkolben ist ein Doppelventilkörper zugeordnet, der Bestandteil eines Einlassventils und eines Auslassventils ist. Beide Steuerkolben sind gleichläufig benachbart auf der einen Seite des Doppelventilkörpers vorgesehen und mit je einem Auslasssitz für den Doppelventilkörper tragenden Fortsatz versehen. An beiden Steuerkolben sind voneinander getrennte Reaktionsflächen vorgesehen. Nur der pneumatisch ansteuerbare Steuerkolben weist eine über eine Voreileinrichtung beaufschlagbare zugeordnete Reaktionsfläche auf.

Aus dem Stand der Technik ist des weiteren eine Ausführung bekannt, bei welcher der pneumatische Backup-Druck und die Sensierung der Pedalbetätigung von einem Fußbremsmodul, bestehend aus Betriebsbremsventil und Bremswertgeber realisiert wird, während der Druck zur Vorderachse mit einem oder zwei Druckregelmodulen erzeugt wird. Dabei besitzen alle Geräte eigene Gehäuse und es müssen sowohl der Vorratsdruck als auch der zu Gewährleistung des rein pneumatischen Rückfallsystems erzeugte Backupdruck über einzelne Leitungen und Verschraubungen angeschlossen werden.

Der Erfindung liegt daher die Aufgabe zugrunde, eine Steuervorrichtung für ein Bremssystem eines Fahrzeuges mit mindestens zwei Bremskreisen zur Beaufschlagung unterschiedlicher Bremszylinder derart weiterzuentwickeln, dass neben einer Verringerung der Anzahl einzelner Bauelemente der zur Verfügung stehende Bauraum noch optimaler ausnutzbar ist und der Installationsaufwand für die elektrischen und pneumatischen Verbindungen eine erhebliche Reduktion erfährt. Des Weiteren ist eine Senkung der Lagerhaltungskosten mit einfachen Mitteln anzustreben, wobei ein hoher Grad an Standardisierung erzielt werden soll. Die Steuereinrichtung soll allen Sicherheitsanforderungen, welche bekannte Systeme mit separaten Geräten erfüllen, gerecht werden.

Die erfindungsgemäße Lösung ist durch die Merkmale des Anspruches 1 charakterisiert. Vorteilhafte Ausgestaltungen sind in den Unteransprüchen wiedergegeben.

Erfindungsgemäß sind bei einer Steuervorrichtung für ein Bremssystem die zum Druckregelmodul gehörende Ventileinrichtung eines ersten elektro-pneumatischen Bremskreises und die mechanisch betätigbare Betriebsbrems-Ventileinrichtung für einen zweiten rein pneumatischen Bremskreis in einer baulichen Einheit zu einer kombinierten elektro-pneumatisch und mechanisch betätigbaren Ventilbaueinheit zusammengefaßt. Die Ventilbaueinheit umfaßt ein Gehäuse, eine im Gehäuse angeordnete erste Ventileinrichtung für den ersten elektro-pneumatischen Bremskreis und eine zweite Ventileinrichtung für den pneumatischen Bremskreis. Jede Ventileinrichtung ist vorzugsweise in einer Teilkammer des Gehäuses untergebracht. Beide Ventileinrichtungen werden erfindungsgemäß aus einer gemeinsamen Druckmittelquelle oder Senke mit Druckmittel gespeist. Dazu ist am Gehäuse ein gemeinsamer Anschluß zur Kopplung mit einer Druckmittelquelle oder Druckmittelsenke vorgesehen, welcher jeweils über einen Einlaß beispielsweise mit einer entsprechenden Ventileinrichtung in Form eines Einlaßventiles mit den Arbeitskammern der ersten elektro-pneumatisch steuerbaren Ventileinrichtung oder der Betriebsbrems-Ventileinrichtung koppelbar ist. Jeder der beiden Bremskreise ist für unterschiedliche Anwendungsfälle konzipiert, daher ist erfindungsgemäß des weiteren jeder Ventileinrichtung - elektro-pneumatisch betätigbarer Ventileinrichtung und Betriebsbrems-Ventileinrichtung - ein separater, d.h. ein dieser zugeordneter Anschluß zur Kopplung mit dem jeweiligen Betriebsbremszylinder zugeordnet. Zur Gewährleistung der Bereitstellung eines Druckes am Betriebsbremszylinder bei Ausfall eines der beiden Systeme ist es daher vorgesehen, die Arbeitskammer der Betriebsbrems-Ventileinrichtung mit der Steuerkammer der elektro-pneumatisch betätigbaren Ventileinrichtung zu verbinden und wahlweise einen Druckaustausch über diese Verbindung zuzulassen. Zu diesem Zweck ist mindestens eine Verbindungsleitung mit integrierter Ventileinrichtung vorgesehen, welche im einfachsten Fall als 2/2-Wegeventil ausgeführt ist, d.h. zwei Anschlüsse und zwei Stellungen aufweist und den Druckmittelstrom zwischen Arbeitskammer und Steuerkammer oder Steuerkammer und Arbeitskammer zuläßt oder nicht. Dadurch wird es möglich, daß insbesondere beim Ausfall der Elektronik trotzdem an dem mit dem entsprechenden Anschluß gekoppelten Betriebsbremszylinder ein Druck bereitgestellt wird.

Gemäß einer besonders vorteilhaften Ausgestaltung sind die einzelnen Elemente der ersten Ventileinrichtung und der Betriebsbrems-Ventileinrichtung koaxial zueinander im Gehäuse angeordnet. Diese Lösung bietet den Vorteil einer sehr einfach gestalteten Ventilbaueinheit, bei welcher auf einfache Art und Weise die Elemente, insbesondere Kolbenelemente, die die Arbeitskammern zumindest auf einer Seite jeder Ventileinrichtung begrenzen, druckdicht geführt werden können.

Die beiden Ventileinrichtungen sind vorzugsweise jeweils einer Teilkammer im Gehäuse zugeordnet, wobei die Kopplung zwischen der Druckmittelquelle oder - senke und der Arbeitskammer über entsprechende Einlässe, die vorzugsweise steuerbar sind, realisiert wird. Dazu sind entsprechende Einlaß-Ventileinrichtungen vorgesehen. Jede Einlaß-Ventileinrichtung umfaßt dabei ein Ventilglied in Form eines Manschettenteiles und einen Ventilsitz, welcher von einer Gehäuseinnenwand, vorzugsweise Zwischenwand, gebildet wird. Die Zwischenwand begrenzt dabei vorzugsweise auch die Kopplung zwischen den Einlaß-Ventilen und dem Anschluß am Gehäuse zur Kopplung von einer Druckmittelquelle oder Druckmittelsenke. Die Ventilglieder sind im einfachsten Fall als Manschettenteile ausgeführt, die verschwenkbar oder verschiebbar gegenüber dem Ventilsitz sind. Als Stelleinrichtungen zur Verstellung der Ventilglieder fungieren dabei die den einzelnen Ventileinrichtungen zugeordneten Kolbenelemente. An den Kolbenelementen sind dazu entsprechende Verlängerungen vorgesehen, die als Stelleinrichtung am Manschettenteil bei Verschiebung des jeweiligen Kolbenelementes wirksam werden.

Die erfindungsgemäße Lösung wird nachfolgend anhand einer Figur erläutert.

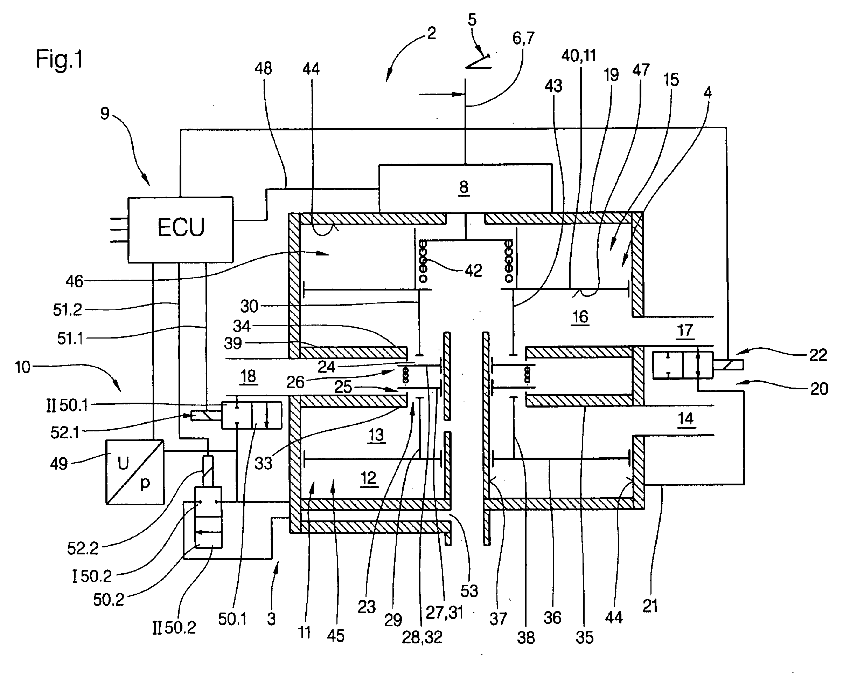

Die Figur 1 verdeutlicht in schematisch vereinfachter Darstellung den Grundaufbau einer Steuervorrichtung 1, insbesondere einer Drucksteuervorrichtung für ein Bremssystem, insbesondere ein Fahrzeug-Bremssystem, in Form eines Zentralmoduls oder zentralsierten Anordnung mit einer erfindungsgemäß ausgeführten kombinierten elektro-pneumatisch und mechanisch betätigbaren Ventilbaueinheit 2. Die Aufgabe der Steuervorrichtung 1 besteht dabei darin, den aus einem Fahrerwunsch nach Bereitstellung eines Bremsmomentes bestimmter Größe erforderlichen Druck einzustellen, zu steuern oder zu regeln. Unter Steuervorrichtung wird dabei die Gesamtheit aus Steuergeräten und Stellgliedern, einschließlich der Verbindungen zwischen diesen verstanden. Die Steuervorrichtung 1 umfaßt einen ersten elektro-pneumatischen Druckkreis und einen zweiten mechanisch-pneumatischen Druckkreis, welche einem ersten elektro-pneumatischen Bremskreis 3 und einem zweiten pneumatischen Bremskreis 4 entsprechen. Dabei bedeutet elektro-pneumatisch, daß die Erzeugung des am entsprechenden Stellglied des Bremssystems, beispielsweise am Betriebsbremszylinder, erforderlichen Druckes pneumatisch und die Einstellung bzw. Steuerung oder Regelung elektronisch erfolgen. Mechanischpneumatisch beinhaltet die Erzeugung des erforderlichen Druckes pneumatisch und die Einstellung bzw. Steuerung oder Regelung mechanisch. Die einzelnen Bremskreise 3 und 4 sind dabei unterschiedlichen Betriebsbremszylindern zugeordnet. Des weiteren sind mindestens eine Einrichtung 5 zur Vorgabe eines Fahrerwunsches nach Bereitstellung bzw. Erzeugung eines Bremsmomentes bestimmter Größe, im allgemeinen ein vom Fahrer bedienbares Betätigungselement 6 und Übertragungselemente, beispielsweise in Form eines Betätigungsstößels 7, welcher mit einem Bremswertgeber 8 gekoppelt ist, vorgesehen. Der erste, elektro-pneumatische Bremskreis 3 umfaßt eine Steuereinrichtung 9 und einen Druckregelmodul 10. Die Funktion des Druckregelmoduls besteht dabei darin, den am Betriebsbremszylinder erforderlichen Druck einzuregeln. Das Druckregelmodul 10 ist hinsichtlich seiner Funktion zwischen der Steuereinrichtung 9 und dem Betriebsbremszylinder angeordnet. Dieser umfaßt mindestens eine elektro-pneumatisch steuerbare Ventileinrichtung 11 mit wenigstens einer Steuerkammer 12 und einer Arbeitskammer 13. Der zweite, pneumatische Bremskreis 4 umfaßt eine mechanisch betätigbare Betriebsbrems-Ventileinrichtung 15 mit einer Arbeitskammer 16. Beide Ventileinrichtungen - erste elektro-pneumatisch steuerbare Ventileinrichtung 11 und zweite Ventileinrichtung in Form der Betriebsbrems-Ventileinrichtung 15 sind in einem gemeinsamen Gehäuse 19 angeordnet und weisen jeweils einen Anschluß zur Kopplung mit einem hier nicht dargestellten Betriebsbremszylinder zur Abbremsung unterschiedlicher Fahrzeuge bzw. Fahrzeugteile auf. Für die erste elektro-pneumatisch steuerbare Ventileinrichtung 11 ist dieser Anschluß mit 14 bezeichnet. Dieser dient der Verbindung der Arbeitskammer 13 zur Kopplung mit mindestens einem ersten, hier nicht dargestellten Betriebsbremszylinder. Für die Betriebsbrems-Ventileinrichtung 15 ist der Anschluß mit 17 gekennzeichnet. Beiden Ventileinrichtungen ist ein gemeinsamer Anschluß 18 am Gehäuse 19 zur Kopplung mit einer Druckmittelquelle oder Druckmittelsenke zugeordnet. Erfindungsgemäß erfolgt dabei die Gewährleistung eines Rückfallsystems bei Ausfall der Elektronik im ersten Bremskreis 3 über den zweiten Bremskreis 4, insbesondere über Mittel 20 zur Kopplung der Arbeitskammer 16 der Betriebsbrems-Ventileinrichtung 15 mit der Steuerkammer 12 der ersten elektro-pneumatisch steuerbaren Ventileinrichtung 11. Diese Mittel umfassen mindestens eine Verbindungsleitung 21, in welcher mindestens eine Ventileinrichtung 22 angeordnet ist. Die Ventileinrichtung 22 ist dabei als 2/2-Wegeventil ausgeführt.

Der gemeinsame Anschluß 18 ist jeweils mit einem Einlaß 24 zur Kopplung der Arbeitskammer 16 der Betriebsbrems-Ventileinrichtung 15 und einem Einlaß 23 zur Kopplung der Arbeitskammer 13 der ersten elektro-pneumatisch steuerbaren Ventileinrichtung 11 verbindbar. Die Steuerung des Einlasses erfolgt über sogenannte Einlaß-Ventileinrichtungen 25 bzw. 26, wobei die Einlaß-Ventileinrichtung 25 der ersten elektro-pneumatisch steuerbaren Ventileinrichtung 11 zugeordnet ist und die Einlaß-Ventileinrichtung 26 der zweiten Ventileinrichtung in Form der Betriebsbrems-Ventileinrichtung 15 zugeordnet ist. Die beiden Einlaßventile werden dabei jeweils von einem verschieb- oder verschwenkbaren Manschettenteil 27 bzw. 28 gebildet, die über entsprechende Stelleinrichtungen, hier 29 und 30, betätigbar sind. Die Manschettenteile 27 und 28 bilden dabei sogenannte Ventilglieder 31 und 32, welche mit einem Ventilsitz, hier der Ventilsitz 33 für das Ventilglied 31 und der Ventilsitz 34 für das Ventilglied 32, in Wirkverbindung treten. Die Ventilsitze 33 und 34 werden dabei vorzugsweise von Zwischenwänden 35 im Gehäuse 19 gebildet. Als Stelleinrichtungen 29 und 30 fungieren dabei Verlängerungen an den ohnehin zur Einstellung der Drücke in den jeweiligen Arbeitskammern 13 und 16 erforderlichen Kolbenelementen der einzelnen Ventileinrichtungen 11 und 15. Die Stelleinrichtung 29 wird dabei von einem ersten Kolbenelement 36 gebildet, welches jeweils im Zusammenwirken mit den Gehäuseinnenwänden die Steuerkammer 12 und die Arbeitskammer 13 der ersten elektro-pneumatisch steuerbaren Ventileinrichtung 11 begrenzt. Zu diesem Zweck ist das erste Kolbenelement 36 im Gehäuse 19 vorzugsweise an einer zentralen Zwischenwand 37 sowie der Gehäuseinnenwand druckdicht geführt. Die Verlängerung des ersten Kolbenelementes 36, welche hier mit 38 bezeichnet ist, erstreckt sich dabei in Richtung des Manschettenteiles 27 für die Arbeitskammer 13 und tritt bei Verschiebung im Gehäuse 19, insbesondere bei Erhöhung des Druckes in der Steuerkammer 12 gegenüber dem Druck in der Arbeitskammer 13, mit dem Manschettenteil 27 in Wirkverbindung und führt zu einer Verschiebung oder Verschwenkung dessen und damit einer Freigabe der Verbindung zwischen Arbeitskammer 13 und dem gemeinsamen Anschluß 18 zur Druckmittelquelle oder Druckmittelsenke. Das Einlaßventil 26 wird von einem Manschettenteil 28 gebildet, wobei der Ventilsitz 34 ebenfalls von einer Zwischenwand 39 gebildet wird. Als Stelleinrichtung 30 fungiert hier die Verlängerung eines Kolbenelementes 40, welche auch als sogenannter Pedalkraftkolben 41 bezeichnet wird. Dieser ist direkt oder über weitere Übertragungselemente, im dargestellten Fall über eine Federeinheit 42, welche sich am Kolbenelement 40 abstützt, mit dem Betätigungselement 6 verbunden. Die Beaufschlagung des Kolbenelementes 40 erfolgt somit nicht unmittelbar bei Betätigung des Betätigungsstößels 7, sondern erst nach Überwindung der Vorspannung an der Federeinheit 42. Die am Kolbenelement 40 angeordnete Verlängerung 43 wirkt bei Verschiebung des Kolbenelementes 40 gegenüber dem Manschettenteil 28 auf dieses ein und führt zu einer Verschiebung oder Verschwenkung und damit einer Freigabe des Einlasses 24, d.h. der Verbindung zwischen dem gemeinsamen Anschluß 18 und der Arbeitskammer 16 des Betriebsbremszylinders. Das Kolbenelement 40 ist zu diesem Zwecke ebenfalls im Gehäuse 19 druckdicht geführt. Vorzugsweise erfolgt die druckdichte Führung direkt an den Gehäuseinnenwänden 44. Das Gesamtgehäuse 19 ist somit für beide Ventileinrichtungen 11 und 15 in zwei Ventilkammern 45 und 46 unterteilt, wobei diese durch die Gehäuseinnenwände 44 und die Zwischenwände 35 bzw. 39 gebildet und 37 werden.

Die Vorgabe eines Fahrerwunsches zur Erzeugung eines bestimmten Bremsmomentes erfolgt über ein entsprechendes Betätigungselement 6, welches entweder direkt oder über den Betätigungsstößel 7 mit dem Bremswertgeber 8 gekoppelt ist. Der Bremswertgeber 8 ist mit dem Pedalkraftkolben 41 verbunden, welcher auf seiner zur Betätigungseinrichtung 6 entgegengesetzt ausgerichteten Fläche 47 die Arbeitskammer 16 des Betriebsbremsventils 15 begrenzt. Dabei wird am Bremswertgeber 8 durch eine, den Fahrerwunsch nach Erzeugung eines bestimmten Bremsmomentes wenigstens mittelbar beschreibende Größe, welche beispielsweise in Form eines Weges, eines Winkels oder eines Druckes erfaßt werden kann, ein elektrisches Signal generiert, welches der elektronischen Steuereinrichtung 9 an einem Eingang 48 zuführbar ist. Aus dem Fahrerwunsch wird der am Betriebsbremszylinder erforderliche Druck ermittelt und entsprechende Stellgrößen zur Einstellung des Druckes an der elektronischen Steuereinrichtung 9 erzeugt und ausgegeben. Im dargestellten Falls sind ein Spannungs-/Druckwandler 49 und zwei Steuer-Ventileinrichtungen - eine erste Steuer-Ventileinrichtung 50.1 und eine zweite Steuer-Ventileinrichtung 50.2 - vorgesehen. Beide sind als Wegeventil ausgeführt. Die Steuerung bzw. Betätigung der Steuer-Ventileinrichtung 50.1 und 50.2 erfolgt elektro-magnetisch, indem an den Ausgängen 51.1 und 51.2 der elektronischen Steuereinrichtung 9 entsprechende Stellsignale zur Beaufschlagung der Stelleinrichtungen 52.2 und 52.1 der Steuer-Ventileinrichtungen 50.1 bzw. 50.2 ausgegeben werden. Die erste Steuer-Ventileinrichtung 50.1 dient dabei der Kopplung zwischen der Verbindung zwischen der Druckmittelquelle bzw. dem Anschluß 18 und der Steuerkammer 12. Die zweite Steuer-Ventileinrichtung 50.2 dient der Kopplung zwischen Steuerkammer 12 und einem Entlastungsraum, insbesondere Schalldämpfer 53 oder der Umgebung.

Die beiden Ventileinrichtungen - erste Ventileinrichtung 50.1 und zweite Ventileinrichtung 50.2 - sind beispielsweise als Wegeventile ausgeführt, welche vorzugsweise elektromagnetisch betätigt, insbesondere über die Steuereinrichtung 9 angesteuert werden. Die erste Funktionsstellung I_{50.1} der ersten Ventileinrichtung 50.1 dient dabei der Steuerung des Druckes auf beiden Seiten des Kolbenelementes 36, insbesondere des Druckes in der Steuerkammer 12. Die zweite Stellung II_{50.1} der ersten Steuer-Ventileinrichtung 50.1 dient dabei dem Halten der Drücke an beiden Kolbenflächen des ersten Kolbenelementes 36. Die zweite Steuer-Ventileinrichtung 50.2 dient der Verminderung des Druckes in der Steuerkammer 12, welche auf der dem Druckeinlaß entgegengerichteten Kolbenfläche wirkt. Diese Fläche wird über eine Druckentlastungseinrichtung in Form eines Schalldämpfers 53 entlastet.

Die einzelnen Elemente der Ventileinrichtungen 11 und 15 sowie die inneren Gehäusewände 37, 44, in welchen die Kolben 36 und 40 geführt sind, sind im einfachsten Fall koaxial zueinander angeordnet. Dies gilt auch für die Innenwände 35 und 39, an denen die Manschettenteile 27, 28 geführt werden.

Mittels der kombinierten elektro-pneumatisch und mechanisch steuerbaren Ventilbaueinheit wird in der Betriebsbrems-Ventileinrichtung 15 ein Druck aus einem dem Gerät zugeordneten Vorrat kraft- und/oder weggesteuert über den Anschluß 18 eingeregelt, über einen Anschluß 17 zu einem ersten Betriebsbremszylinder geführt, während im zweiten Teil des kombinierten Gerätes, insbesondere der anderen Teilkammer 45 ein davon unabhängiger Druck über einen elektrischen Wandler in der Steuerkammer 12 eingesteuert wird. Die für diese beiden Drücke erforderliche Vorratsluft wird aus ein und derselben Druckmittelquelle über den gleichen Anschluß 18 bezogen. Beim Ausfall der elektrischen Regelung, d.h. der Betätigung der Ventileinrichtung 11, wird als Steuerdruck der im Betriebsbremsventil 15 eingestellte kraft-/weggesteuerte Druck verwendet. Dieser wird über die Verbindungsleitung 21 und die Ventileinrichtung 22 in der Steuerkammer 12 eingeregelt. Ist die elektrische Regelung intakt, d.h. der erste elektro-pneumatische Bremskreis 3 arbeitet, wird die Verbindung zwischen kraft- und weggesteuertem Druck des ersten Bremskreises 4 und der Steuerkammer 12 mit der Ventileinrichtung 22, welche als Absperrventil fungiert, unterbrochen.

### Bezugszeichenliste

- 1: Steuervorrichtung
- 2: kombinierte elektro-pneumatisch und mechanisch betätigbare Ventilbauein- heit
- 3: elektro-pneumatischer Druckkreis, elektro-pneumatischer Bremskreis
- 4: mechanisch-pneumatischer Druckkreis, mechanisch-pneumatischer Brems- kreis
- 5: Einrichtung zur Vorgabe eines Fahrerwunsches nach Erfolgen eines Brems- momentes bestimmter Größe
- 6: Betätigungselement
- 7: Betätigungsstößel
- 8: Bremswertgeber
- 9: Steuereinrichtung
- 10: Druckregelmodul
- 11: elektro-pneumatisch steuerbare Ventileinrichtung
- 12: Steuerkammer
- 13: Arbeitskammer
- 14: Anschluß von der Arbeitskammer 13 zur Kopplung mit dem Betriebsbremszy- linder
- 15: Betriebsbrems-Ventileinrichtung
- 16: Arbeitskammer
- 17: Anschluß
- 18: gemeinsamer Anschluß
- 19: Gehäuse
- 20: Mittel zur Kopplung der Arbeitskammer 16 mit der Steuerkammer 12 der ersten elektro-pneumatisch steuerbaren Ventileinrichtung
- 21: Verbindungsleitung
- 22: Ventileinrichtung
- 23: Einlaß
- 24: Einlaß
- 25: erstes Einlaßventil
- 26: zweites Einlaßventil
- 27: erstes Manschettenteil
- 28: zweites Manschettenteil
- 29: erste Stelleinrichtung
- 30: zweite Stelleinrichtung
- 31: Ventilglied
- 32: Ventilglied
- 33: Ventilsitz
- 34: Ventilsitz
- 35: Zwischenwand
- 36: erstes Kolbenelement
- 37: zentrale Zwischenwand
- 38: Verlängerung
- 39: Zwischenwand
- 40: Kolbenelement
- 41: Pedalkraftkolben
- 42: Federeinheit
- 43: Verlängerung
- 44: Gehäuseinnenwand
- 45: Teilkammer
- 46: Teilkammer
- 47: Fläche
- 48: Eingang
- 49: Spannungswandler
- 50.1: erste Steuer-Ventileinrichtung
- 50.2: zweite Steuer-Ventileinrichtung
- 51.1: Ausgang
- 51.2: Ausgang
- 52.1: Stelleinrichtung
- 52.2: Stelleinrichtung
- 53: Schalldämpfer

## Patentansprüche

1. Kombinierte elektro-pneumatisch und mechanisch betätigbare Ventilbaueinheit (2) für Bremssysteme mit mindestens einem ersten elektro-pneumatischen Bremskreis (3) und einem zweiten pneumatischen Bremskreis (4) zur Ansteuerung unterschiedlicher Bremszylinder;
- mit einem Gehäuse (19) und einer im Gehäuse angeordneten ersten Ventileinrichtung (11) für den ersten elektro-pneumatischen betätigten Bremskreis (3) und einer zweiten Betriebsbrems-Ventileinrichtung (15) für den zweiten pneumatischen Bremskreis (4);
- die erste Ventileinrichtung (11) umfasst mindestens eine Arbeitskammer (13) und eine Steuerkammer (12);
- die zweite Betriebsbrems-Ventileinrichtung (15) umfasst mindestens eine Arbeitskammer (16); **dadurch gekennzeichnet, dass**
- jede Ventileinrichtung (11, 15) ist über einen am Gehäuse (19) angeordneten und gemeinsam nutzbaren Anschluss (18) mit einer Druckmittelquelle oder Druckmittelsenke verbindbar ist;
- jede Ventileinrichtung (11, 15) jeweils einen Anschluß (14, 17) zur Kopplung mit unterschiedlichen Betriebsbremszylindern aufweist;
- sowie Mittel (20) zur wahlweisen Verbindung zwischen der Arbeitskammer (16) der Betriebsbrems-Ventileinrichtung (15) und der Steuerkammer (12) der ersten elektro-pneumatisch betätigbaren Ventileinrichtung (11) vorgesehen sind.

2. Kombinierte elektro-pneumatisch und mechanisch betätigbare Ventilbaueinheit (2) nach Anspruch 1, **gekennzeichnet durch** folgende Merkmale:
- die Mittel (20) zur wahlweisen Verbindung zwischen der Arbeitskammer (16), der Betriebsbrems-Ventileinrichtung (15) und der Steuerkammer (12) der ersten elektro-pneumatisch betätigbaren Ventileinrichtung (11) umfassen mindestens eine Verbindungsleitung (21) zwischen der Arbeitskammer (16) der Betriebsbrems-Ventileinrichtung (15) oder einem Anschluß an die Arbeitskammer (16), der Betriebsbrems-Ventileinrichtung (15) und der Steuerkammer (12) oder einem Anschluss an die Steuerkammer (12) der ersten elektro-pneumatisch steuerbaren Ventileinrichtung (11),
- in der Verbindungsleitung (21) ist eine Ventileinheit (22) mit mindestens zwei Schaltstellungen integriert.

3. Kombinierte elektro-pneumatisch und mechanisch betätigbare Ventilbaueinheit (2) nach Anspruch 2, **dadurch gekennzeichnet, dass** die Ventileinrichtung (22) als 2/2-Wegeventileinrichtung ausgeführt ist.

4. Kombinierte elektro-pneumatische und mechanisch betätigbare Ventilbaueinheit (2) nach einem der Ansprüche 1 bis 3, **dadurch gekennzeichnet, dass** die Elemente der ersten Ventileinrichtung (11) und der Betriebsbrems-Ventileinrichtung (15) koaxial zueinander im Gehäuse (19) angeordnet sind.

5. Kombinierte elektro-pneumatische und mechanisch betätigbare Ventilbaueinheit (2) nach einem der Ansprüche 1 bis 4, **dadurch gekennzeichnet, dass** jede Ventileinrichtung (15, 11) ein Kolbenelement (36, 40) umfasst, welches im Gehäuse (19) druckdicht geführt ist und den jeweiligen Arbeitsraum (16, 13) begrenzt.

6. Kombinierte elektro-pneumatische und mechanisch betätigbare Ventilbaueinheit (2) nach einem der Ansprüche 1 bis 4, **gekennzeichnet durch** folgende Merkmale:
- jede Ventileinrichtung (11, 15) ist in einer Teilkammer (45, 46) im Gehäuse (19) angeordnet;
- beide Ventileinrichtungen (11, 15), insbesondere deren Arbeitskammern (13, 16) sind in den Einlass-Ventileinrichtungen (25, 26) mit dem gemeinsamen Anschluss (18) zur Kopplung mit einer Druckmittelquelle oder -senke gekoppelt.

7. Kombinierte elektro-pneumatisch und mechanisch betätigbare Ventilbaueinheit (2) nach Anspruch 6, **gekennzeichnet durch** die folgenden Merkmale:
- die der ersten elektro-pneumatisch betätigbaren Ventileinrichtung (11) zugeordnete Einlass-Ventileinrichtung (25) zur Verbindung der Arbeitskammer (13) und dem gemeinsamen Anschluss (18), umfasst einen Ventilsitz (33) und ein Ventilglied (31);
- das Ventilglied (31) ist als Manschettenteil (27) ausgeführt, der Ventilsitz (33) wird von einer Gehäusewand (35) gebildet;
- die Stelleinrichtung (29) zur Verstellung des Ventilgliedes (31) wird von einem druckdicht im Gehäuse (19) geführten Kolbenelement (36) der ersten elektro-pneumatischen Ventileinrichtung (11) gebildet.

8. Kombinierte elektro-pneumatisch betätigbare und mechanisch betätigbare Ventilbaueinheit (2) nach einem der Ansprüche 6 oder 7, **gekennzeichnet durch** die folgenden Merkmale:
- die Betriebsbrems-Ventileinrichtung (15) umfasst ein wenigstens indirekt über weitere Übertragungselemente oder direkt mit einem Betätigungselement (5) zur Vorgabe eines Fahrerwunsches verbundene Betätigungsstößel (7) gekoppeltes Kolbenelement (40, 41), welches direkt oder über andere Übertragungselemente an der Einlass-Ventileinrichtung (26) wirksam wird;
- die Einlass-Ventileinrichtung (26) der Betriebsbrems-Ventileinrichtung (15) umfasst ein Ventilglied (32) in Form eines Manschettenteils (28) und einen Ventilsitz (30), welcher von einer Gehäuseinnenwand (39) des Gehäuses (19) gebildet wird;
- dem Ventilglied (32) ist ein Stelleinrichtung zugeordnet, welche vom Kolbenelement (40) der Betriebsbrems-Ventileinrichtung (15) gebildet wird.

9. Kombinierte elektro-pneumatisch und mechanisch betätigbare Ventilbaueinheit (2) nach einem der Ansprüche 7 oder 8, **dadurch gekennzeichnet, dass** das Manschettenteil (27, 28) bewegbar oder verschwenkbar ist.

10. Kombinierte elektro-pneumatisch und mechanisch betätigbare Ventilbaueinheit nach einem der Ansprüche 1 bis 9, **dadurch gekennzeichnet, dass** jede Ventileinrichtung (11, 15) mit einem Entlastungsraum (53) verbindbar ist.

## Claims

1. Combined valve module (2) for electro-pneumatic and mechanical operation for brake systems including at least one first electro-pneumatic brake circuit (3) and one second pneumatic brake circuit (4) for controlling different brake cylinders; comprising
- a housing (19) and a first valve means (11) disposed in said housing for said first electro-pneumatically operable brake circuit (3) and a second service brake valve means (15) for said second pneumatic brake circuit (4);
- said first valve means (11) comprises at least one operating chamber (13) and one control chamber (12);
- said second service brake valve means (15) comprises at least one operating chamber (16);
**characterised in that**
- each valve means (11, 15) is adapted to be connected to a source of pressurised medium or a pressurised-medium basin via a connector (18) disposed on said housing (19) and to be used in common;
- each valve means (11, 15) comprises one respective connector (14, 17) for coupling to different service brake cylinders;
- and means (20) are provided for the selective connection between said operating chamber (16), said service brake valve means (15) and said control chamber (12) of said first electro-pneumatically operable valve means (11).

2. Combined valve module (2) for electro-pneumatic and mechanical operation to Claim 1, **characterised by** the following features:
- said means (20) for the selective connection between said operating chamber (16), said service brake valve means (15) and said control chamber (12) of said first electro-pneumatically operable valve means (11) comprise at least one connecting line (21) between said operating chamber (16) of said service brake valve means (15) or a connector to said operating chamber (16), said service brake valve means (15) and said control chamber (12) or a connector to said control chamber (12) of said first valve means (11) for electro-pneumatic control,
- a valve means (22) with at least two switching positions is integrated into said connecting line (21).

3. Combined valve module (2) for electro-pneumatic and mechanical operation according to Claim 2, **characterised in that** said valve means (22) is designed as 2/2 way valve means.

4. Combined valve module (2) for electro-pneumatic and mechanical operation according to any of the Claims 1 to 4, **characterised in that** the elements of said first valve means (11) and of said service brake valve means (15) are disposed in said housing (19) coaxially with respect to each other.

5. Combined valve module (2) for electro-pneumatic and mechanical operation according to any of the Claims 1 to 4, **characterised in that** each valve means (15, 11) comprises a piston element (36, 40) which is guided in said housing (19) in a pressure-tight manner and which defines the respective operating space (16, 13).

6. Combined valve module (2) for electro-pneumatic and mechanical operation according to any of the Claims 1 to 4, **characterised by** the following features:
- each valve means (11, 15) is disposed in a partial chamber (45, 46) in said housing (19);
- both valve means (11, 15), in particular their operating chambers (13, 16), are coupled in said inlet valve means (25, 26) to said common connector (18) for coupling to a source of pressurised medium or pressurised-medium basin.

7. Combined valve module (2) for electro-pneumatic and mechanical operation according to Claim 6, **characterised in** by the following features:
- the inlet valve means (25) for establishing the connection between said operating chamber (13) and said common connector (18), which is associated with said first valve means (11) for electro-pneumatic operation, comprises a valve seat (33) and a valve member (31);
- said valve member (31) is designed as sleeve member (27), with said valve seat being formed by a housing wall (35);
- the regulating means (29) for adjustment of said valve member (31) is constituted by a piston element (36) of said first electro-pneumatic valve means (11), which is guided in a pressure-tight manner in said housing (19).

8. Combined valve module (2) for electro-pneumatic and mechanical operation according to any of the Claims 6 or 7, **characterised by** the following features:
- said service brake valve means (15) comprises a piston element (40, 41) coupled to an actuating valve tappet (7) at least indirectly via further transmitting elements or directly to an actuator element (5) for the specification of a driver's wish, which piston element becomes operative on said inlet valve means (26) directly or via other transmitting elements;
- said inlet valve means (26) of said service brake valve means (15) comprises a valve member (32) in the form of a sleeve member (28) and a valve seat (30), which is constituted by an internal housing wall (39) of said housing (19);
- a regulating means is associated with said valve member (32), which is constituted by said piston element (40) of said service brake valve means (15).

9. Combined valve module (2) for electro-pneumatic and mechanical operation according to any of the Claims 7 or 8, **characterised in that** said sleeve member (27, 28) is mobile or pivotable.

10. Combined valve module (2) for electro-pneumatic and mechanical operation according to any of the Claims 1 to 9, **characterised in** said each valve means (11, 15) is adapted to be connected to a compensating space (53).

## Revendications

1. Module à vanne (2) combiné à commande électropneumatique et mécanique pour des systèmes de freinage renfermant au moins un premier circuit de freinage électropneumatique (3) et un deuxième circuit de freinage pneumatique (4) à commander des cylindres de frein différents ; comprenant
- un carter (19) et un premier moyen à soupape (11) disposé dans ledit carter pour ledit premier circuit de freinage à commande électropneumatique (3) et un deuxième moyen à soupape du frein de service (15) pour ledit deuxième circuit de freinage (4) ;
- ledit premier moyen à soupape (11) comprend au moins une chambre de travail (13) et une chambre de commande (12) ;
- ledit deuxième moyen à soupape du frein de service (15) comprend au moins une chambre de travail (16) ;
**caractérisé en ce que**
- chaque moyen à soupape (11, 15) est apte à être relié à une source de milieu sous pression ou un réservoir de milieu sous pression via un connecteur (18) disposé audit carter (19) et à l'emploi en commun ;
- chaque moyen à soupape (11, 15) comprend un connecteur respectif (14, 17) pour l'accouplement aux cylindres de frein différents ;
- et **en ce que** des moyens (20) sont disposés pour la connexion sélective entre ladite chambre de travail (16), ledit moyen à soupape du frein de service (15) et ladite chambre de commande (12) dudit premier moyen à soupape (11) à commande électropneumatique.

2. Module à vanne (2) combiné à commande électropneumatique et mécanique selon la revendication 1, **caractérisé par** les caractéristiques suivantes :
- ledit moyen (20) pour le raccord sélectif entre ladite chambre de travail (16), ledit moyen à soupape du frein de service (15) et ladite chambre de commande (12) dudit premier moyen à soupape à commande électropneumatique (11) comprend au moins une conduite de connexion (21) entre ladite chambre de travail (16) dudit moyen à soupape du frein de service (15) ou un connecteur à ladite chambre de travail (16), ledit moyen à soupape du frein de service (15) et ladite chambre de commande (12) ou un connecteur à ladite chambre de commande (12) dudit premier moyen à soupape (11) pour la commande électropneumatique,
- un moyen à soupape (22) à au moins deux position de commutation est intégré dans ladite conduite de connexion (21).

3. Module à vanne (2) combiné à commande électropneumatique et mécanique selon la revendication 2, **caractérisé en ce que** ledit moyen à soupape (22) est conçu sous forme d'un moyen à soupape à 2/2 voies.

4. Module à vanne (2) combiné à commande électropneumatique et mécanique selon une quelconque des revendications 1 à 4, **caractérisé en ce que** les éléments dudit premier moyen à soupape (11) et dudit moyen à soupape du frein de service (15) sont disposés dans ledit carter (19) en positions coaxiales l'un relativement à l'autre.

5. Module à vanne (2) combiné à commande électropneumatique et mécanique selon une quelconque des revendications 1 à 4, **caractérisé en ce que** chaque moyen à soupape (15, 11) comprend un élément de piston (36, 40), qui est guidé dans ledit carter (19) d'une manière étanche à la pression et qui délimite un espace de travail respectif (16, 13).

6. Module à vanne (2) combiné à commande électropneumatique et mécanique selon une quelconque des revendications 1 à 4, **caractérisé par** les caractéristiques suivantes :
- chaque moyen à soupape (11, 15) est disposé dans une chambre partielle (45, 46) dans ledit carter (19) ;
- les deux moyens à soupape (11, 15), en particulier leurs chambres de travail (13, 16), sont accouplés dans ledit moyen à soupape d'admission (25, 26) audit connecteur commun (18) pour l'accouplement à une source de milieu sous pression ou réservoir de milieu sous pression.

7. Module à vanne (2) combiné à commande électropneumatique et mécanique selon la revendication 6, **caractérisé par** les caractéristiques suivantes:
- ledit moyen à soupape d'admission (25) à établir la communication entre ladite chambre de travail (13) et ledit connecteur commun (18), qui est affecté audit premier moyen à soupape (11) à commande électropneumatique, comprend une siège de soupape (33) et un élément de soupape (31) ;
- ledit élément de soupape (31) est conçu sous forme d'un élément en manchon (27), à ladite siège de soupape étant formée par une paroi (35) dudit carter ;
- ledit moyen de réglage (29) pour l'ajustement dudit élément de soupape (31) est constitué par un élément de piston (36) dudit premier moyen à soupape (11) à commande électropneumatique, qui est guidé, d'une façon étanche à la pression, dans ledit carter (19).

8. Module à vanne (2) combiné à commande électropneumatique et mécanique selon une quelconque des revendications 6 ou 7, **caractérisé par** les caractéristiques suivantes :
- ledit moyen à soupape du frein de service (15) comprend un élément de piston (40, 41) accouplé à un poussoir de soupape de commande(7) au moins indirectement, via des autres éléments de transfert ou directement, à un élément acteur (5) pour la spécification d'un désir du conducteur, audit élément de piston devenant opératif sur ledit moyen à soupape d'admission (26) directement ou via des autres éléments de transfert ;
- ledit moyen à soupape d'admission (26) dudit moyen à soupape du frein de service (15) comprend un élément de soupape (32) sous forme d'un élément en manchon (28) et une siège de soupape (30), qui est constitué par une paroi intérieure de carter (39) dudit (19) ;
- un moyen de réglage est affecté audit élément de soupape (32), qui est constitué par ledit élément de piston (40) dudit moyen à soupape du frein de service (15).

9. Module à vanne (2) combiné à commande électropneumatique et mécanique selon une quelconque des revendications 7 ou 8, **caractérisé en ce que** ledit élément en manchon (27, 28) est mobile ou pivotable.

10. Module à vanne (2) combiné à commande électropneumatique et mécanique selon une quelconque des revendications 1 à 9, **caractérisé en ce que** chaque moyen à soupape (11, 15) est apte à être relié à un espace d'équilibrage (53).
